Europäisches Patentamt

European Patent Office

Office européen des brevets

(11) Veröffentlichungsnummer: **0 306 456**
**A1**

# EUROPÄISCHE PATENTANMELDUNG

(21) Anmeldenummer: **88810588.9**

(22) Anmeldetag: **26.08.88**

(51) Int. Cl.4: **B 23 K 26/00**

(30) Priorität: **01.09.87 DE 8711811**

(43) Veröffentlichungstag der Anmeldung:
**08.03.89 Patentblatt 89/10**

(84) Benannte Vertragsstaaten:
**AT CH DE ES FR GB IT LI SE**

(71) Anmelder: **Schmall, Karl-Heinz**
**Waldstrasse 20**
**D-7570 Baden-Baden 19 (DE)**

(72) Erfinder: **Schmall, Karl-Heinz**
**Waldstrasse 20**
**D-7570 Baden-Baden 19 (DE)**

(74) Vertreter: **Hepp, Dieter et al**
**HEPP & Partner AG Marktgasse 18**
**CH-9500 Wil (CH)**

(54) **Feinantrieb für ein Laserwerkzeug.**

(57) Ein Laserwerkzeug (1, 5, 16, 21, 25) ist zusätzlich zum Hauptantrieb mit einem Feinantrieb versehen. Der Feinantrieb weist eine Antriebseinrichtung (8 bis 12, 28, 29) auf, die am Laserwerkzeug angreift, vorzugsweise das Laserwerkzeug umgibt. Diese Antriebseinrichtung besteht vorzugsweise aus einer Magnetanordnung (9 bis 12) und einer Spule (8, 28), die um einen Abschnitt des Laserwerkzeugs gewickelt ist. Als Halteanordnung für das Laserwerkzeug eignet sich besonders gut eine ringförmige Membran (6, 7).

Fig. 1

EP 0 306 456 A1

**Beschreibung**

## Feinantrieb für ein Laserwerkzeug

Die Erfindung betrifft einen Feinantrieb für ein Laserwerkzeug.

Laserstrahlen aus Leistungslaser-Quellen werden vorwiegend durch optische Linsen derart gebündelt auf die Oberfläche des zu bearbeitenden Werkstücks gerichtet, dass der Brennpunkt optimal zur Erzielung des gewünschten Effekts liegt. Bei der Bearbeitung eines Werkstücks aus Stahl beispielsweise, ist die Wärmeeinwirkung der Laser-Energie in das Werkstück hinein dann optimal, wenn der Brennpunkt knapp unter der Werkstückoberfläche positioniert wird. Sofern die Oberfläche eines Werkstücks nicht plan ist, kann sich die Brennpunktlage bereits bei geringen Abstandsänderungen so ungünstig verändern, dass die gewünschte Wirkung erheblich verschlechtert wird.

Laserwerkzeuge gibt es für die verschiedensten Zwecke und in verschiedensten Ausführungsformen. Derzeit wird am häufigsten eine Düsenanordnung verwendet, an deren Ende sowohl der Laserstrahl als auch ein zum Bearbeitungsprozess erforderliches Gas austritt.

Um bei einem solchen Werkzeug den Düsen-Werkstück-Abstand konstant zu halten, sind sensorgeführte Dusen bekannt, z.B. durch die US-PS-4,298,784 und JP-OS-083877/79.

Die Laserdüse wird dabei durch Sensorsignale eines oder mehrerer abstandsensitiver Sensoren geführt. Die Sensorsignale werden in bekannter Weise einer Regelanordnung oder einer Steueranordnung eines Antriebsmotors zugeführt. Dieser bewirkt die Verlagerung der Düse relativ zum Werkstück. Dabei lässt sich der Abstand zufriedenstellend konstant halten.

Bei Bearbeitungsmaschinen mit Vorschub in drei Achsen ist die zum Werkstück hin gerichtete sogenannte Z-Achse meistens mit grossem Hub versehen. Damit sollen alle Topographien des Werkstücks, beispielsweise eines Kraftfahrzeug-Bauteils, durch den Antrieb ansteuerbar und "verfolgbar" werden.

Dies trifft vor allem für Roboter zu, bei denen die Düsenspitze in der Regel mittels eines vorprogrammierbaren Ablaufs über die Oberflächenform des Werkstücks geführt wird. Infolge von Toleranzen und Einzel-Abweichungen der Oberflächenkonfiguration von Werkstücken ist es aber sogar bei solchen Roboter-Steuerungen erforderlich, die Düse selbst relativ zum Werkstück und meistens unabhängig von der Robotersteuerung in einem kleinen Hubbereich auszulenken. Dazu wird meist ein separater Regelkreis vorgesehen, der einen an der Düse angebrachten Abstandssensor aufweist und mit sehr schnellen Zeitkonstanten die Nachführung der Düse gegenüber der Oberfläche des Werkstücks vornimmt. Dabei besteht die Forderung nach sehr schneller Reaktion der Antriebseinrichtung auf Abstandsänderungen, insbesondere bei hohen Bearbeitungsgeschwindigkeiten der Maschine z.B. des Roboters. Bei grossen Vorschubgeschwindigkeiten können Stellsignale für die Antriebseinrichtung Frequenzen bis zu 20 Hz erreichen.

Der Einsatz konventioneller Antriebseinrichtungen und Motore führt dabei allerdings zu einer Vielzahl rotierender Massen (Wellen, Getriebe usw.) die grosse kenetische Energie aufnehmen. Ein Grossteil der Antriebsleistung muss dabei zur Ueberwindung des Trägheitsmoments der Antriebseinrichtungen selbst verwendet werden. Ausserdem sind derartige Antriebe wartungsintensiv und teuer. Aehnliche Probleme ergeben sich bei Hydraulik-Antrieben.

Aufgabe der Erfindung ist es die Nachteile des Bekannten zu vermeiden. Insbesondere soll ein schneller, kostengünstiger und wartungsarmer Feinantrieb ausreichender Genauigkeit geschaffen werden. Solche Feinantriebe weisen Hübe von wenigen Millimetern bis ca. 20 mm und darüber auf.

Die Erfindung erreicht dies gemäss Kennzeichen von Anspruch 1. Durch den Einsatz der in das stationäre Feld eintauchenden Spule, die ihrerseits am Laserwerkzeug befestigt ist, wird sowohl geringe Massen-Beschleunigung als auch schnelle Hubfrequenz ermöglicht. Durch Steuerung des Stromflusses durch die Spule lassen sich sowohl kurzfristige Auslenkungen erreichen als auch Hübe über einen längeren Zeitraum erhalten. Je nach Anwendungsfall kann eine oder mehrere Spule und es können auch ein oder mehrere Magnete zur Erzeugung des Magnetfelds vorgesehen werden.

Besonders geringe bewegliche Massen ergeben sich, wenn die Spule am Laserwerkzeug befestigt ist und die Magnetanordnung zur Erzeugung des Magnetfelds stationär ist.

Das Magnetfeld ist zweckmässigerweise so gestaltet, dass die auf dem Laserwerkzeug befindlichen Spulen stets im weitgehend homogenen Bereich des Magnetfelds verbleiben. Die Länge der Spule bzw. der Spulen ist jedoch grosser als die Länge des homogenen Magnetfelds.

Besonders einfache Bauform ergibt sich, wenn die Spule das Laserwerkzeug umgibt.

In der praktischen Realisierung ergibt sich eine besonders einfache und kostengünstige Bauform, wenn das stationäre Magnetfeld im Arbeitsluftspalt einer Magnetanordnung gebildet ist, wobei die Magnetanordnung vorzugsweise einen Permanentmagneten aufweist.

Weitere Reduzierung der beweglichen Massen und besonders Warmeableitung von der Spule über das Werkzeug lässt sich erreichen, wenn die Spule direkt um einen Abschnitt des Werkzeugs gewickelt ist.

Einfache Herstellung und gute Anpassung an die meisten Laser-Bearbeitungswerkzeuge ergibt sich, wenn der Arbeitsluftspalt ein Ringspalt ist.

Eine besonders einfache Ausführungsform ergibt sich, wenn die Magnetanordnung einen Rohrkörper aufweist, der einerseits in den Magnetfluss einbezogen ist und andererseits als Mantel-Rohr für den Laserstrahl dient.

Das Laserwerkzeug, bzw. das Endteil des Laserwerkzeugs soll dabei an einer in Axialrichtung verlagerbaren Halteanordnung befestigt sein.

Vorteilhaft ist es, wenn die Halteanordnung wenigstens ein in Axialrichtung federndes Element aufweist, da auf diese Weise eine Rückstellkraft in eine definierte Null-Lage erzeugt wird.

Besonders gute Ergebnisse lassen sich erzielen, wenn die Halteanordnung wenigstens eine ringförmige Membran aufweist, die um den Hubweg des Werkzeugs federnd auslenkbar ist.

Die durch Verluste entstehende Wärme an der Spule kann vorteilhafterweise durch das sowieso verwendete Arbeitsgas abgeführt werden. Dies lässt sich besonders dann erreichen, wenn das Gas durch Hohlräume im Innern des Werkzeugs geführt und möglichst im Spulenbereich in der Wandung oder in entsprechend an der Wand angeformten Kanälen geführt wird.

Die Erfindung ist im folgenden in Ausführungsbeispielen anhand der Zeichnungen näher erläutert. Es zeigen:

Figur 1 Einen schematisch im Teilschnitt dargestellten Feinantrieb mit den Merkmalen der Erfindung,

Figur 2 ein abgewandeltes Ausführungsbeispiel gemäss Figur 1,

Figur 3 ein Prinzipschaltbild für die Steuerung des Feinantriebs gemäss der Erfindung.

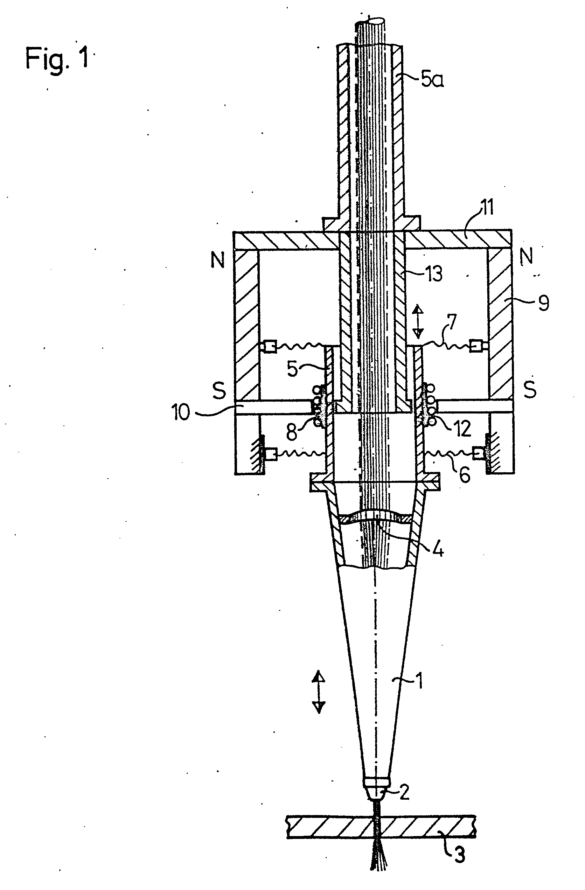

Gemäss Figur 1 wird eine Düse 1 durch einen Abstands-Sensor 2 über ein Werkstück 3 "geführt". Im Innern der Düse 1 ist eine Linse 4 zur Bündelung des Laserstrahls 4a vorgesehen. Die Düse 1 weist an ihrem unteren Arbeitsende eine Oeffnung auf, aus welcher der Laserstrahl 4a austritt. Ausserdem wird dort ein Arbeitsgas ausgeblasen, welches über den stationären Rohrkörper 5a und das Magnet-Eisenrohr 13 der Düse 11 zugeführt und an der Linse 4 vorbeigeleitet wird. Die Düse 1 ist an einem Rohrkörper 5 befestigt, welcher eine Spule 8 trägt. Der Rohrkörper 5 ist seinerseits mittels zwei Membranen 6 und 7 axial, d.h. in der Zeichnung vertikal auslenkbar an einem Magnet 9 bzw. an einer Endplatte 10 befestigt. Eine zweite Endplatte 11 ist mit einem Magnet-Eisenrohr 13 verbunden, so dass ich zwischen diesem und der Endplatte 10 ein Arbeitsluftspalt 12 ergibt, in welchem sich die Spule 8 befindet. Der ringförmige Magnet 9 hat oben den Nord- und unten den Südpol, so dass sich im gesamten ringförmigen Arbeitsluftspalt 12 ein in gleicher Richtung verlaufendes Feld ergibt. Selbstverständlich ist es auch möglich, anstelle des Ring-Magneten 9 einzelne Dauermagneten oder einen Elektromagnet vorzusehen.

Zum Auslenken der Düse 1 wird Spannung an die Spule 8 angelegt, und die Amplitude Polarität des resultierenden Stroms bewirkt die Auslenkung nach oben oder unten. Da die Membranen 6 und 7 federnd wirken, ist eine vertikale Auslenkung ohne weiteres möglich. Der Arbeitsluftspalt 12 ist derart schmal, dass das vom stationären Rohr 5a bzw. vom Magnet-Eisenrohr 13 herangeleitete Arbeitsgas praktisch verlustfrei in die Düse 1 geblasen wird.

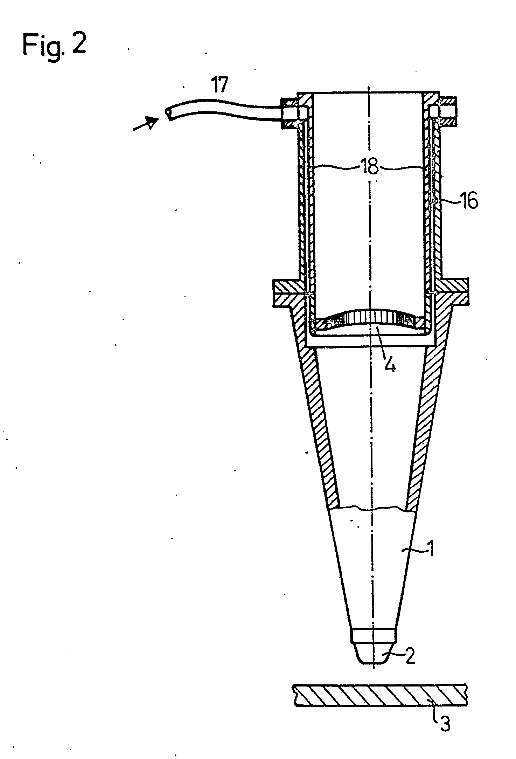

Figur 2 zeigt ein Ausführungsbeispiel, bei welchem eine Spule dort nicht dargestellt) mit grossen Arbeits-Strömen und damit grosser Erwärmung verwendet wird. Deshalb ist im Rohrkörper 16, welcher die nicht dargestellte Spule trägt, eine Anzahl von Kanälen 18 vorgesehen, die über einen Einlass 17 mit Arbeitsgas gespeist werden. Das Arbeitsgas kühlt damit unmittelbar die Wandung des Rohrkörpers 16 und führt damit die Verlustwärme der Spule ab, bevor es durch die Düse 1 zum Werkstück 3 hin austritt.

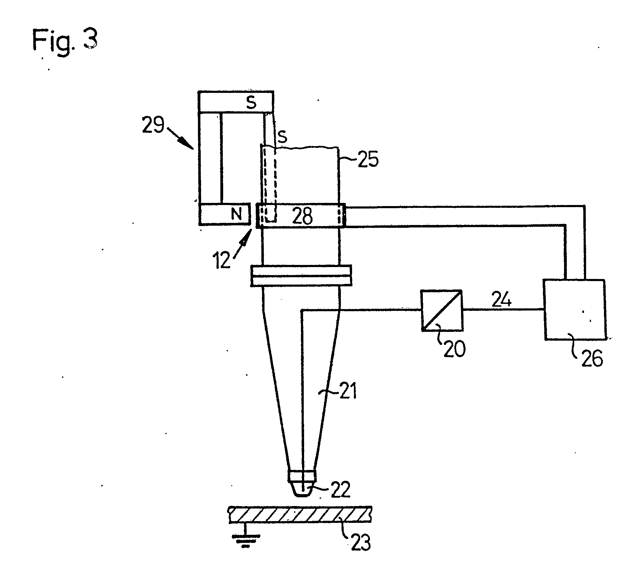

Figur 3 zeigt den neuen Linearantrieb mit einer Düse 21, einem Sensor 22, einem Werkstück 23 und einem Rohrkörper 25. Zum Vertikalantrieb der Düse 21 ist analog Figur 1 eine nur skizzierte Magnet-Anordnung 29 und eine Spule 28 vorgesehen, welche um den Rohrkörper 25 gewickelt ist. Wie dargestellt, werden die vom Sensor 22 ermittelten abstandsabhängigen Signale einem Umsetzer 20 zugeführt, welcher über eine Leitung 24 entsprechende Regelsignale an einen Antriebsverstärker 26 abgibt, der seinerseits die Spule 28 speist. Die Regelsignale bewirken z.B., dass in der Sollstellung der Düse 21, und damit des Sensors 22, keine Spannung an der Spule 28 anliegt. Verkleinert sich jedoch der Abstand, wird das Signal und damit die Spannung an der Spule 28 negativ, vergrössert sich der Abstand, wird die Spannung positiv. Wenn nun der Antriebs-Verstärker 26 einen entsprechenden Strom abgibt, so wird sich die Spule 28 entsprechend der Richtung und der Stärke des Stroms im Feld des Arbeitsluftspalts 12 nach oben oder unten bewegen. Richtung und Amplitude der Auslenkung kann so gewählt werden, dass der Abstandsfehler nahezu völlig kompensiert wird.

Selbstverständlich lässt sich anstelle der Lagerung mittels Membranen gemäss Figur 1 auch eine Lagerung in Büchsen oder Schiebelagern vorsehen, Nullpunkt-Einstellung kann durch zusätzliche Federn oder auf andere Weise erzeugt werden. Hier sind dem Fachmann unabhängig von der speziell gewählten Aufhängung ("frei" oder "Rollenführung" oder "Schiebesitz" etc.) hinsichtlich der Auswahl der einsetzbaren Federelemente keine Grenzen gesetzt.

## Patentansprüche

1. Feinantrieb für ein Laserwerkzeug, gekennzeichnet durch eine Antriebseinrichtung (8, 9, 10, 11, 12, 28, 29) mit wenigstens einer in ein stationäres Magnetfeld (12) eintauchenden, stromdurchflossenen Spule (8, 28), welche Antriebseinrichtung am Laserwerkzeug (1, 5, 16, 21, 25) angreift.

2. Feinantrieb nach Anspruch 1, dadurch gekennzeichnet, dass die Spule (8, 28) am Laserwerkzeug (1, 5, 16, 21, 25) befestigt ist.

3. Feinantrieb nach Anspruch 1 oder 2, dadurch gekennzeichnet, dass die Spule (8, 28) das Laserwerkzeug (1, 5, 16, 21, 25) umgibt.

4. Feinantrieb nach einem der vorangegangenen Ansprüche, dadurch gekennzeichnet, dass das stationäre Magnetfeld (12) im Arbeitsluftspalt einer Magnetanordnung (9, 10, 11, 29) gebildet ist.

5. Feinantrieb nach Anspruch 4, dadurch gekennzeichnet, dass die Magnetanordnung wenigstens einen Permanentmagnet (9, 29) aufweist.

6. Feinantrieb nach einem der vorangegangenen Ansprüche, dadurch gekennzeichnet, dass die in das Magnetfeld (12) eintauchende Spule (8, 28) um einen Abschnitt (5, 25) des Laserwerkzeugs (1, 5, 16, 21, 25) gewickelt ist.

7. Feinantrieb nach einem der vorangegangenen Ansprüche, dadurch gekennzeichnet, dass der Arbeitsluftspalt (12) ein Ringspalt ist.

8. Feinantrieb nach einem der vorangegangenen Ansprüche, dadurch gekennzeichnet, dass das Laserwerkzeug (1, 5, 16, 21, 25) im Bereich ihres Bearbeitungsendes relativ zu einem stationären Rohrkörper (5a) beweglich angeordnet ist.

9. Feinantrieb nach einem der vorangegangenen Ansprüche, dadurch gekennzeichnet, dass ein Magnet-Eisenrohr (13) vorgesehen ist, welches einerseits Teil der Magnetanordnung (9, 10, 11, 12) ist, und das andererseits mit dem stationären Rohrkörper (5a) verbunden ist und den Laserstrahl umgibt.

10. Feinantrieb nach einem der vorangegangenen Ansprüche, dadurch gekennzeichnet, dass das Laserwerkzeug (1, 5, 16, 21, 25) bzw. das Endteil (1, 21) an einer in Axialrichtung verlagerbaren Halteanordnung (6, 7) befestigt ist.

11. Feinantrieb nach Anspruch 10, dadurch gekennzeichnet, dass die Halteanordnung (6, 7) in Axialrichtung verschiebbar gelagert und durch wenigstens ein in Axialrichtung federndes Element gehalten ist.

12. Feinantrieb nach Anspruch 11, dadurch gekennzeichnet, dass die Halteranordnung (6, 7) wenigstens eine ringförmige Membran aufweist.

13. Feinantrieb nach einem der vorangegangenen Ansprüche, dadurch gekennzeichnet, dass das Laserwerkzeug (1, 5, 16, 21, 25) im Inneren Hohlräume (Innenraum der Düse 1, 21 bzw. der Rohrkörper (5, 5a, 25 bzw. Kanäle 18) aufweist, die von einem Arbeitsgas bis in den Bereich des Werkzeugendes durchströmt wird, und dass das Arbeitsgas zur Kühlung der Spule (8, 28) im Bereich der Spulenbefestigung an dieser vorbeigeleitet wird.

Fig. 1

Fig. 2

Fig. 3

Europäisches
Patentamt

**EUROPÄISCHER RECHERCHENBERICHT**

Nummer der Anmeldung

EP 88 81 0588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | PATENT ABSTRACTS OF JAPAN Band 8, Nr. 80 (M-289) (1517) 12. April 1984; & JP - A - 58 224 091 (TOSHIBA KIKAI K.K.) 26.12.1983 --- | 1 | B 23 K 26/00 |
| D,A | US-A-4 298 784 (K.H. SCHMALL) * Anspruch 1; Figur 2 * ----- | 1 | |
| | | | **RECHERCHIERTE SACHGEBIETE (Int. Cl.3)** B 23 K 7/00 B 23 K 26/00 |

Der vorliegende Recherchenbericht wurde für alle Patentansprüche erstellt

| Recherchenort | Abschlußdatum der Recherche | Prüfer |
|---|---|---|
| BERLIN | 22-11-1988 | WUNDERLICH J E |